Europäisches Patentamt

European Patent Office

Office européen des brevets

(19)

(11) EP 0 622 379 B1

(12) **EUROPÄISCHE PATENTSCHRIFT**

(45) Veröffentlichungstag und Bekanntmachung des Hinweises auf die Patenterteilung:
08.07.1998 Patentblatt 1998/28

(51) Int. Cl.$^6$: **C08F 10/02**, C08F 4/654

(21) Anmeldenummer: 94106326.5

(22) Anmeldetag: 22.04.1994

(54) **Verfahren zur Herstellung eines Katalysatorsystems für die Polymerisation und Copolymerisation von Ethylen zu ultrahochmolekularen Ethylenhomo- und copolymeren**

Process for the production of a catalyst system for the (co)polymerisation of ethylene into ultra-high molecular weight ethylene (co)polymers

Procédé de préparation d'un système catalytique pour la (co)polymérisation d'éthylène en (co)polymères d'éthylène à poids moléculaire élevé

(84) Benannte Vertragsstaaten:
**BE DE ES FR GB IT NL**

(30) Priorität: **29.04.1993 DE 4314072**

(43) Veröffentlichungstag der Anmeldung:
**02.11.1994 Patentblatt 1994/44**

(73) Patentinhaber: **Ticona GmbH**
**65926 Frankfurt am Main (DE)**

(72) Erfinder:
• **Bilda, Dieter, Dr.**
  **D-65929 Frankfurt (DE)**
• **Böhm, Ludwig, Dr.**
  **D-65795 Hattersheim (DE)**

(56) Entgegenhaltungen:
**EP-A- 0 030 742        EP-A- 0 103 120**
**EP-A- 0 575 840        WO-A-92/00332**

EP 0 622 379 B1

**Beschreibung**

Die Erfindung bezieht sich auf ein Verfahren zur Herstellung von hochaktiven Katalysatoren für die Niederdruckpolymerisation von 1-Olefinen zu ultrahochmolekularen Produkten mit einer Molmasse $M_w$ gleich oder größer $1 \times 10^6$ g/mol.

Es ist bekannt, hochmolekulares Polyethylen im Niederdruckverfahren mit ZIEGLER-Katalysatoren zu synthetisieren, indem man Katalysatoren verwendet, die durch Umsetzung von Verbindungen der Elemente der IV. bis VI. Nebengruppe des Periodensystems mit metallorganischen Verbindungen der I. bis III. Hauptgruppe des Periodensystems hergestellt werden. Die Wirksamkeit dieser Katalysatoren läßt sich durch eine Fixierung auf $MgCl_2$-Trägern wesentlich erhöhen.

Neben molekularen Eigenschaften wie Molmasse und Molmassenverteilung spielen morphologische Eigenschaften der hochmolekularen Produkte, wie beispielsweise Korngröße und Korngrößenverteilung, eine entscheidende Rolle für die Verarbeitungseigenschaften und Anwendungsmöglichkeiten.

Bekannt ist ein Katalysator, der durch Umsetzung von wasserfreiem $MgCl_2$ mit Ethanol, Diethylaluminiumchlorid und Titantetrachlorid hergestellt wird und bei Polymerisationstemperaturen von unterhalb 50°C ultrahochmolekulares Polyethylen mit einer intrinsischen Viskosität von 27 dl/g erzeugt (vgl. US 4 933 393).

Weiterhin ist ein Katalysator beschrieben worden, bei dem zwei verschiedene Titanverbindungen auf einen organischen Träger aufgebracht werden und mit dem Polyethylen mit einer Molmasse $M_w$ von ca. $2 \times 10^6$ g/mol hergestellt werden kann (vgl. DD 282 013).

Ultrahochmolekulares Polyethylen mit enger Korngrößenverteilung kann auch mit einem Katalysator hergestellt werden, der auf sauerstoffhaltigen anorganischen Mg-Verbindungen basiert (vgl. EP 349 146).

Auch ist ein Katalysatorsystem zur Herstellung von ultrahochmolekularem Polyethylen bekannt, das durch den Einsatz löslicher Titanester zu Polymeren mit enger Korngrößenverteilung und definierter Korngröße führt (vgl. EP 523 657).

Schließlich wird ein Katalysator zur Herstellung von ultrahochmolekularem Polyethylen beschrieben, der durch Umsetzung von $MgCl_2$ mit einer Alkoxytitan-Verbindung, einem Aluminiumtrihalogenid und einem Tetraalkoxysilan hergestellt werden kann (vgl. US 4 962 167).

Um den Nachteil der oft zu grobkörnig anfallenden Polymerisate zu beseitigen, werden aufwendige Mahlprozesse für das Polyethylen erforderlich (vgl. US 3 847 888).

Aufgabe der Erfindung war, ein hochaktives Katalysatorsystem zu entwickeln, das in der Lage ist, ultrahochmolekulare Ethylenpolymere mit enger Korngrößenverteilung und einem mittleren Korndurchmesser im Bereich von 100 bis 200 µm herzustellen.

Diese Aufgabe wird erfindungsgemäß gelöst, indem in der ersten Stufe der Katalysatorherstellung ein Feststoff synthetisiert wird, der das Umsetzungsprodukt einer Dialkylmagnesiumverbindung mit einem Halogenierungsagens ist und der eine mittlere Korngröße < 10 µm aufweist.

Bei der Lösung dieser Aufgabe wurde vorausgesetzt, daß ein Katalysatorteilchen ein Polymerteilchen erzeugt und daß das Wachstum kugelförmig erfolgt (Multigrain-Modell).

Daraus folgt, daß der Katalysatorteilchendurchmesser durch die Produktivität (KA), die größer als 20 kg PE/mmol Ti sein soll, auf Werte < 10 µm begrenzt wird.

Die Erfindung betrifft somit ein Verfahren zur Herstellung einer Katalysatorkomponente mit einem Teilchendurchmesser von weniger als 10 µm zur Polymerisation und Copolymerisation von Ethylen und 1-Olefinen zu ultrahochmolekularen Ethylenhomo- oder -copolymeren in Suspension oder in der Gasphase,

dadurch gekennzeichnet, daß

a) eine Magnesiumverbindung der Formel I

$$R^1 - Mg - R^2 \qquad (I),$$

worin $R^1$ und $R^2$ gleich oder verschieden sind und einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeuten, in einem inerten Kohlenwasserstoff bei einer Temperatur von 0 bis 100°C und einer Rührgeschwindigkeit von mindestens 600 Upm mit

b) einem Halogenierungsagens der Formel II

$$X_n - C - Y \qquad (II),$$

worin X ein Halogenatom, $n \geq 3$ ist und Y Wasserstoff, Halogen, einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeutet,

zu einem festen Produkt, überwiegend bestehend aus einer Verbindung der allgemeinen Formel III

$$Mg - X_2 \qquad (III),$$

worin X die vorgenannte Bedeutung hat, umgesetzt wird und

c) mit einer in Kohlenwasserstoffen löslichen Titanverbindung der Formel IV

$$Z_m - Ti - Y_{4-m} \qquad (IV),$$

worin Z und Y gleich oder verschieden sind und ein Halogenatom, eine $C_1$-$C_6$-Alkoxygruppe oder einen $C_1$-$C_{20}$-Carboxyrest bedeuten und m eine Zahl von 0 bis 4 ist, im Molverhältnis Ti : Mg von 0,01 bis 1 zur Reaktion gebracht wird, wobei

d) eine Elektronendonatorverbindung bei einer der Reaktionsstufen a), b) oder c) in einer Menge von 0,01 bis 1 mol je mol Magnesiumverbindung zugegen ist.

Zur Herstellung des erfindungsgemäßen Katalysators wird eine Magnesiumverbindung der Formel I

$$R^1 - Mg - R^2 \qquad (I),$$

in der $R^1$ und $R^2$ gleich oder verschieden sind und einen $C_1$-$C_{20}$-, vorzugsweise $C_2$-$C_8$-Alkylrest, einen $C_5$-$C_{20}$-, vorzugsweise $C_6$-$C_8$-Cycloalkylrest, einen $C_6$-$C_{20}$-, vorzugsweise $C_6$-$C_{10}$-Arylrest oder einen $C_2$-$C_{20}$-, vorzugsweise $C_2$-$C_8$-Alkenylrest bedeuten, eingesetzt. Diese Magnesiumverbindung wird umgesetzt mit einem Halogenierungsagens der Formel II

$$X_n - C - Y \qquad (II),$$

worin X ein Halogenatom, vorzugsweise Cl, n ≥ 3 ist und Y Wasserstoff, Halogen, einen $C_1$-$C_{20}$-, vorzugsweise $C_2$-$C_8$-Alkylrest, einen $C_5$-$C_{20}$-, vorzugsweise $C_6$-$C_8$-Cycloalkylrest, einen $C_6$-$C_{20}$-, vorzugsweise $C_6$-$C_{10}$-Arylrest oder einen $C_2$-$C_{20}$-, vorzugsweise $C_2$-$C_8$-Alkenylrest bedeutet.

Die Umsetzung wird in einem Kohlenwasserstoff mit 4 bis 12 C-Atomen oder einem Gemisch derartiger Kohlenwasserstoffe durchgeführt. Geeignete Kohlenwasserstoffe sind beispielsweise Butane, Hexane, Octane, Decane, Cyclohexane und Benzinfraktionen, die diese Kohlenwasserstoffe enthalten. Die Reaktionstemperatur beträgt 0 bis 100°C.

Man erhält ein festes Produkt, überwiegend bestehend aus einer Verbindung der Formel III

$$Mg - X_2 \qquad (III),$$

worin X die obengenannte Bedeutung hat.

Für die Lösung der Aufgabe erweist sich der Einsatz einer Elektronendonatorverbindung als notwendig. Geeignete Donatorverbindungen sind neben Estern von Carbonsäuren Ether, Ketone, Amide sowie sauerstoffhaltige Phosphor- und Schwefelverbindungen.

Typische Ester sind beispielsweise Alkylbenzoate, Alkylphthalate und Alkylanisate. Vorzugsweise wird die Elektronendonatorverbindung vor der Fixierung der Titanverbindung mit dem Katalysatorträger (III) umgesetzt. Es ist jedoch auch möglich, Träger, Donator und Titanverbindung gleichzeitig umzusetzen oder die Titanverbindung als Addukt mit dem Elektronendonator mit dem Träger reagieren zu lassen. Der Gehalt an Donatorkomponente beträgt 0,01 bis 1, vorzugsweise 0,05 bis 0,5 mol je mol Magnesium. Das Molverhältnis zwischen Elektronendonator und Titanverbindung liegt im Bereich von 0,1 bis 10, vorzugsweise von 0,5 bis 1,5.

Das Addukt der Verbindung (III) mit dem Elektronendonator wird mit einer in Kohlenwasserstoffen löslichen Titanverbindung der Formel IV

$$Z_m - Ti - Y_{4-m} \qquad (IV),$$

worin Z und Y gleich oder verschieden sind und ein Halogenatom, vorzugsweise Cl, oder eine $C_1$-$C_6$-, vorzugsweise $C_1$-$C_4$-Alkoxygruppe oder einen $C_1$-$C_{20}$-, vorzugsweise $C_1$-$C_8$-Carboxyrest bedeuten und m eine Zahl von 0 bis 4 ist, in einem inerten Kohlenwasserstoff bei einer Temperatur von 0 bis 100°C umgesetzt (Komponente A). Das Molverhältnis Ti : Mg liegt im Bereich 0,01 bis 1, vorzugsweise 0,02 bis 0,2.

Die Komponente A kann als Suspension direkt mit der Komponente B umgesetzt werden; sie kann jedoch auch zunächst als Feststoff isoliert, gelagert und zur späteren Weiterverwendung wieder suspendiert werden.

Als Komponente B werden vorzugsweise aluminiumorganische Verbindungen verwendet. Als aluminiumorganische Verbindungen eignen sich chlorhaltige aluminiumorganische Verbindungen, wie Dialkylaluminiummonochloride der Formel $R^4_2$AlCl oder Alkylaluminiumsesquichloride der Formel $R^4_3$Al$_2$Cl$_3$, worin $R^4$ ein Alkylrest mit 1 bis 16 Kohlenstoffatomen ist.

Als Beispiele seien genannt $(C_2H_5)_2$AlCl, $(iC_4H_9)_2$AlCl, $(C_2H_5)_3$Al$_2$Cl$_3$. Es können auch Gemische dieser Verbindungen eingesetzt werden.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise Al$(iC_4H_9)_3$ oder Al$(iC_4H_9)_2$H, mit 4 bis 20 Kohlenstoffatome enthaltenden Diolefinen, vorzugsweise Isopren. Beispielsweise sei Aluminiumisoprenyl genannt.

Andererseits eignen sich als solche chlorfreie aluminiumorganische Verbindungen Aluminiumtrialkyle Al$R^4_3$ oder Aluminiumdialkylhydride der Formel Al$R^4_2$H, in denen $R^4$ ein Alkylrest mit 1 bis 16 Kohlenstoffatomen bedeutet. Beispiele sind Al$(C_2H_5)_3$, Al$(C_2H_5)_2$H, Al$(C_3H_7)_3$, Al$(C_3H_7)_2$H, Al$(iC_4H_9)_3$, Al$(iC_4H_9)_2$H, Al$(C_8H_{17})_3$, Al$(C_{12}H_{25})_3$, Al$(C_2H_5)(C_{12}H_{25})_2$, Al$(iC_4H_9)(C_{12}H_{25})_2$.

Es können auch Mischungen von metallorganischen Verbindungen von Metallen der I., II. oder III. Gruppe des Periodensystems, insbesondere Mischungen verschiedener aluminiumorganischer Verbindungen eingesetzt werden. Beispielsweise seien folgende Mischungen genannt:
Al$(C_2H_5)_3$ und Al$(iC_4H_9)_3$, Al$(C_2H_5)_2$Cl und Al$(C_8H_{17})_3$, Al$(C_2H_5)_3$ und Al$(C_8H_{17})_3$, Al$(C_4H_9)_2$H und Al$(C_8H_{17})_3$, Al$(iC_4H_9)_3$ und Al$(C_8H_{17})_3$, Al$(C_2H_5)_3$ und Al$(C_{12}H_{25})_3$, Al$(iC_4H_9)_3$ und Al$(C_{12}H_{25})_3$, Al$(C_2H_5)_3$ und Al$(C_{16}H_{33})_3$, Al$(C_3H_7)_3$ und Al$(C_{18}H_{37})_2(iC_4H_9)$, Al$(C_2H_5)_3$ und Aluminiumisoprenyl (Umsetzungsprodukt von Isopren mit Al$(iC_4H_9)_3$ oder Al$(iC_4H_9)_2$H).

Das Mischen der Komponente A und der Komponente B kann vor der Polymerisation in einem Rührkessel bei einer Temperatur von -30 bis 150°C, vorzugsweise -10 bis 120°C erfolgen. Es ist auch möglich, die beiden Komponenten direkt im Polymerisationskessel bei einer Temperatur von 20 bis 200°C zu vereinigen. Die Zugabe der Komponente B kann jedoch auch in zwei Schritten erfolgen, indem vor der Polymerisationsreaktion die Komponente A mit einem Teil der Komponente B bei einer Temperatur von -30 bis 150°C voraktiviert wird und die weitere Zugabe der Komponente B in den Polymerisationsreaktor bei einer Temperatur von 20 bis 200°C erfolgt.

Der erfindungsgemäß zu verwendende Polymerisationskatalysator wird zur Polymerisation von 1-Olefinen der Formel $R^5$-CH = $CH_2$, in der $R^5$ ein Wasserstoffatom oder einen Alkylrest mit 1 bis 10 C-Atomen bedeutet, eingesetzt, beispielsweise Ethylen, Propylen, 1-Buten, 1-Hexen, 4-Methyl-1-penten, 1-Octen. Vorzugsweise wird Ethylen allein oder als Gemisch von mindestens 90 Gew.-%, insbesondere mindestens 95 Gew.-% Ethylen und maximal 10 Gew.-%, insbesondere maximal 5 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200°C, vorzugsweise 50 bis 150°C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente A in einer Konzentration, bezogen auf Übergangsmetall, von 0,0001 bis 1, vorzugsweise 0,0005 bis 0,1 mmol Übergangsmetall pro $dm^3$ Dispergiermittel angewendet. Die metallorganische Verbindung wird in einer Konzentration von 0,1 bis 5 mmol, vorzugsweise 0,5 bis 4 mmol pro $dm^3$ Dispergiermittel verwendet. Prinzipiell sind aber auch höhere Konzentrationen möglich.

Die Suspensionspolymerisation wird in einem für das Ziegler-Niederdruck-Verfahren gebräuchlichen inerten Dispergiermittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin können Benzin- bzw. hydrierte Dieselölfraktionen, die sorgfältig von Sauerstoff, Schwefelverbindungen und Feuchtigkeit befreit worden sind, benutzt werden.

Die Gasphasenpolymerisation kann direkt oder nach Vorpolymerisation des Katalysators in einem Suspensionsverfahren durchgeführt werden.

Die Molmasse des Polymerisats wird durch Temperatur oder durch Kettenabbruchreagenzien geregelt, vorzugsweise wird dazu Wasserstoff verwendet.

Ein Vorteil des erfindungsgemäßen Verfahrens besteht darin, daß mittels der erfindungsgemäß hergestellten Katalysatorkomponente A Polymere mit einem mittleren Korndurchmesser von 50 bis 200 μm hergestellt werden können und daß dieser mittlere Korndurchmesser durch den Katalysatorpartikeldurchmesser und durch die Katalysatorproduktivität eingestellt werden kann.

Außerdem kann ultrahochmolekulares Polyethylen mit einer Viskositätszahl von größer als 2000 $cm^3$/g hergestellt werden.

Die folgenden Beispiele erläutern die Erfindung. Es bedeuten:

KA      Katalysatorproduktivität [kg PE/mmol Ti]

$KZA_{red}$    Reduzierte Katalysator-Zeit-Ausbeute [kg PE/mmolTi*h*bar]

$d_{50}$     Mittlere Teilchengröße [μm]

SD     Polymerschüttdichte [g/$dm^3$] (gemessen nach DIN 53 468)

VZ     Viskositätszahl [$cm^3$/g] (gemessen nach DIN 53 728)

$D_m$    Massenmittel des Durchmessers

$D_n$    Zahlenmittel des Durchmessers

Die mittlere Korngröße und die Korngrößenverteilung der Katalysator- und Polymerteilchen wurden mittels Malvern-Laserlichtbeugung bestimmt. Das Verhältnis $D_m/D_n$ wurde nach NF X 11-630 vom Juni 1981 bestimmt:

$$D_m = [\Sigma n_i(d_i)^3 d_i]/[\Sigma n_i(d_i)^3]$$

$$D_n = [\Sigma n_i d_i]/\Sigma n_i$$

Beispiel 1

a) Herstellung der Katalysatorkomponente

Zu einer Lösung von 0,15 mol n-Butyl-n-octylmagnesium (BOMAG-A der Fa. WITCO; 20 %ig in Heptan) in 50 $cm^3$ einer Benzinfraktion wurden unter Inertbedingungen innerhalb einer Stunde bei 65°C 0,15 mol Tetrachlormethan in 50 $cm^3$ der Benzinfraktion getropft. Die Rührgeschwindigkeit betrug 600 upm. Es bildete sich ein brauner, feindisperser Feststoff. Man rührte den Ansatz noch eine halbe Stunde bei 85 °C und erhielt die Suspension $a_1$.

Anschließend wurden 0,05 mol Diisobutylphthalat, gelöst in 20 $cm^3$ der Benzinfraktion, als Elektronendonator zur Suspension $a_1$ getropft und das Gemisch eine halbe Stunde bei 80°C gerührt. Man erhielt die Suspension $a_2$.

Titantetrachlorid (0,05 mol), in 50 $cm^3$ der Benzinfraktion gelöst, wurde innerhalb einer Stunde bei einer Reaktionstemperatur von 85°C zur Suspension $a_2$ getropft (Suspension $a_3$)

Die dunkelbraune Suspension wurde noch 2 h bei 80°C gerührt und anschließend 4-mal mit 500 $cm^3$ der Benzinfraktion gewaschen. Der Titangehalt der Katalysatorsuspension betrug 31,5 mmol/$dm^3$. Die Katalysatorteilchen wiesen nach lichtmikroskopischen Messungen einen mittleren Durchmesser von 9,5 μm auf.

Der Quotient $D_m/D_n$ betrug 1,16.

b) Polymerisation

Die Polymerisation von Ethylen wurde isobar in einem 1,5 dm$^3$-Laborautoklaven in 800 cm$^3$ einer Benzinfraktion bei einer Rührerdrehzahl von 750 upm bei einem Ethylenpartialdruck von 4 bar während eines Zeitraums von 2 Stunden durchgeführt. Die Polymerisationstemperatur betrug 80°C. Als Cokatalysator wurde 1 mmol Triisobutylaluminium eingesetzt. Die Suspension der Katalysatorkomponente A wurde auf eine Konzentration von 1 mmol Ti/dm$^3$ verdünnt. Von dieser verdünnten Suspension wurden 3 cm$^3$ zur Polymerisation verwendet.

Die Reaktion wurde durch Entspannen und Abkühlen beendet und das Polymere durch Filtration und Trocknung vom Dispergiermittel abgetrennt. Man erhielt 164 g Polyethylen entsprechend einer KA von 55 kg PE/mmol Ti und einer KZA$_{red}$ von 6,8 kg PE/mmol Ti*h*bar.
Die VZ betrug 2950 cm$^3$/g, das Produkt hatte eine Schüttdichte von 340 g/dm$^3$ und einen d$_{50}$ von 189 μm . Der Quotient D$_m$/D$_n$ betrug 1,14.

Beispiel 2

a) Herstellung der Katalysatorkomponente

Zu einer Lösung von 0,3 mol einer 0,6 molaren Lösung von n-Bu$_2$Mg in Octan, hergestellt durch eine Grignard-Reaktion von n-BuCl und Magnesiumpulver unter anschließender Abtrennung des Feststoffes, wurden unter Inertbedingungen innerhalb einer Stunde bei 65°C 0,3 mol Tetrachlormethan in 50 cm$^3$ der Benzinfraktion getropft. Die Rührgeschwindigkeit betrug 600 upm. Es bildete sich ein brauner, feindisperser Feststoff. Man rührte den Ansatz noch eine halbe Stunde bei 85 °C und erhielt die Suspension a$_1$.

Anschließend wurden 0,10 mol n-Butanol, gelöst in 20 cm$^3$ der Benzinfraktion, als Elektronendonator zur Suspension a$_1$ getropft und das Gemisch eine halbe Stunde bei 80°C gerührt. Man erhielt die Suspension a$_2$.

Titantetrachlorid (0,15 mol), in 50 cm$^3$ der Benzinfraktion gelöst, wurde innerhalb einer Stunde bei einer Reaktionstemperatur von 85°C zur Suspension a$_2$ getropft (Suspension a$_3$).

Die dunkelbraune Suspension wurde noch 2 h bei 90°C gerührt und anschließend 4-mal mit 500 cm$^3$ der Benzinfraktion gewaschen. Der Titangehalt der Katalysatorsuspension betrug 28,5 mmol/dm$^3$. Die Katalysatorteilchen wiesen nach lichtmikroskopischen Messungen einen mittleren Durchmesser von 8,2 μm auf.

b) Polymerisation

Die Polymerisation wurde wie im Beispiel 1 durchgeführt. Es wurden 191 g Polyethylen entsprechend einer KA von 64 kg PE/mmol Ti und einer KZA$_{red}$ von 8,0 kg PE/mmol Ti*h*bar erhalten.

Die VZ betrug 2600 cm$^3$/g, das Produkt hatte eine Schüttdichte von 350 g/dm$^3$ und einen d$_{50}$ von 174 μm. Der Quotient D$_m$/D$_n$ betrug 1,18.

Beispiel 3

a) Herstellung der Katalysatorkomponente

Zu einer Lösung von 0,3 mol einer 0,76 molaren Lösung von n-Hexyl-Magnesium-n-octyl in Heptan, hergestellt durch eine Grignard-Reaktion von n-Hexylchlorid, n-Octylchlorid und Magnesiumpulver unter anschließender Abtrennung des Feststoffes, wurden unter Inertbedingungen innerhalb einer Stunde bei 65°C 0,6 mol 1,1,1-Trichlorethan in 50 cm$^3$ der Benzinfraktion getropft. Die Rührgeschwindigkeit betrug 700 upm. Es bildete sich ein brauner, feindisperser Feststoff. Man rührte den Ansatz noch eine halbe Stunde bei 85 °C und erhielt die Suspension a$_1$.

Anschließend wurden 0,13 mol Diethylsulfit, gelöst in 20 cm$^3$ der Benzinfraktion, als Elektronendonator zur Suspension a$_1$ getropft und das Gemisch eine halbe Stunde bei 80°C gerührt. Man erhielt die Suspension a$_2$.

Titantetrachlorid (0,15 mol), in 50 cm$^3$ der Benzinfraktion gelöst, wurde innerhalb einer Stunde bei einer Reaktionstemperatur von 85°C zur Suspension a$_2$ getropft (Suspension a$_3$).

Die dunkelbraune Suspension wurde noch 2 h bei 90°C gerührt und anschließend 4-mal mit 500 cm$^3$ der Benzinfraktion gewaschen. Der Titangehalt der Katalysatorsuspension betrug 28,5 mmol/dm$^3$. Die Katalysatorteilchen wiesen nach lichtmikroskopischen Messungen einen mittleren Durchmesser von 9,2 μm auf.

b) Polymerisation

Die Polymerisation wurde wie im Beispiel 1 durchgeführt. Es wurden 172 g Polyethylen entsprechend einer KA von 57 kg PE/mmol Ti und einer KZA$_{red}$ von 7,2 kg PE/mmol Ti*h*bar erhalten.

Die VZ betrug 3200 cm$^3$/g, das Produkt hatte eine Schüttdichte von 360 g/dm$^3$ und einen d$_{50}$ von 171 μm . Der Quotient D$_m$/D$_n$ betrug 1,19.

Beispiel 4

a) Herstellung der Katalysatorkomponente

Zu einer Lösung von 0,3 mol einer 0,66 molaren Lösung von Propyl-Magnesium-n-butyl in Heptan, hergestellt durch eine Grignard-Reaktion von n-Propylchlorid, n-Butylchlorid und Magnesiumpulver unter anschließender Abtrennung des Feststoffes, wurden unter Inertbedingungen innerhalb einer Stunde bei 65°C 0,6 mol Trichlormethan in 50 cm$^3$ der Benzinfraktion getropft. Die Rührgeschwindigkeit betrug 700 upm. Es bildete sich ein brauner, feindisperser Feststoff. Man rührte den Ansatz noch eine halbe Stunde bei 85 °C und erhielt die Suspension $a_1$.

Anschließend wurden 0,13 mol Diethoxydimethylsilan, gelöst in 20 cm$^3$ der Benzinfraktion, als Elektronendonator zur Suspension $a_1$ getropft und das Gemisch eine halbe Stunde bei 80°C gerührt. Man erhielt die Suspension $a_2$.

Titantetrachlorid (0,15 mol), in 50 cm$^3$ der Benzinfraktion gelöst, wurde innerhalb einer Stunde bei einer Reaktionstemperatur von 85°C zur Suspension $a_2$ getropft (Suspension $a_3$).

Die dunkelbraune Suspension wurde noch 2 h bei 90°C gerührt und anschließend 4-mal mit 500 cm$^3$ der Benzinfraktion gewaschen.

Der Titangehalt der Katalysatorsuspension betrug 31,2 mmol/dm$^3$. Die Katalysatorteilchen wiesen nach lichtmikroskopischen Messungen einen mittleren Durchmesser von 8,2 µm auf.

b) Polymerisation

Die Polymerisation wurde wie im Beispiel 1 durchgeführt.

Es wurden 187 g Polyethylen entsprechend einer KA von 62 kg PE/mmol Ti und einer KZA$_{red}$ von 7,8 kg PE/mmol Ti*h*bar erhalten.

Die VZ betrug 3050 cm$^3$/g, das Produkt hatte eine Schüttdichte von 350 g/dm$^3$ und einen d$_{50}$ von 169 µm. Der Quotient D$_m$/D$_n$ betrug 1,17.

Beispiel 5

a) Herstellung der Katalysatorkomponente

Die Herstellung der Katalysatorkomponente A wurde analog Beispiel 2 durchgeführt.

Der Titangehalt der Katalysatorsuspension betrug 28,2 mmol/dm$^3$.Die Katalysatorteilchen wiesen nach lichtmikroskopischen Messungen einen mittleren Durchmesser von 9,0 µm auf.

b) Polymerisation

Die Polymerisation wurde in einem 150 dm$^3$-Kessel in 100 dm$^3$ einer Benzinfraktion mit 7,0 cm$^3$ der vorgenannten Katalysatorkomponente A, entsprechend 0,2 mmol Titan, mit 0,1 mol Triisobutylaluminium als Cokatalysator durchgeführt. Die Ethyleneingasmenge betrug 4,0 kg/h. Die Polymerisationstemperatur war 80 °C, die Polymerisationsdauer betrug 3,5 h. Die Reaktion wurde durch Entspannen und Abkühlen beendet und das Polymere durch Filtration und Trocknung vom Dispergiermittel abgetrennt.

Man erhielt 25,2 kg Polyethylen entsprechend einer KA von 126 kg PE/mmol Ti und einer KZA$_{red}$ von 8,0 kg PE/mmol Ti*h*bar erhalten.

Die VZ betrug 3150 cm$^3$/g das Produkt hatte eine Schüttdichte von 385 g/dm$^3$ und einen d$_{50}$ von 198 µm. Der Quotient D$_m$/D$_n$ betrug 1,14.

Beispiel 6

a) Herstellung der Katalysatorkomponente

Die Katalysatorkomponente A wurde analog Beispiel 3 hergestellt.

b) Gasphasenpolymerisation von Ethylen

In einem 2-dm$^3$-Stahlautoklaven mit polierten Wandflächen wurde eine Gasphasenpolymerisation von Ethylen durchgeführt. Das Wirbelbett wurde mit Hilfe eines wandgängigen Doppelwendelrührers bei einer Vorlage von 10 g Polyethylenpulver als Saatbett mechanisch erzeugt. Über eine Druckbürette wurden zunächst der Cokatalysator (2 mmol Triisobutylaluminium in 2 cm$^3$ iso-Pentan) und danach 2 cm$^3$ der Katalysatorsuspension (0,01 mmol Ti) in den Autoklaven dosiert. Nach mehrmaligem Aufdrücken von Argon und Evakuieren zur Entfernung des Suspensionsmittels wurde die Polymerisation bei 8 bar Ethylenpartialdruck bei einer Temperatur von 80 °C über 2 Stunden durchgeführt und durch Entspannen des Autoklaven beendet.

207 g Polyethylen entsprechend einer KA von 20,7 kg PE/mmol Ti bzw. einer KZA$_{red}$ von 1,3 kg PE/mmol Ti*h*bar wurden erhalten.

Die VZ betrug 2630 cm$^3$/g, das Produkt hatte eine Schüttdichte von 380 g/dm$^3$ und einen d$_{50}$ von 134 µm.

**Patentansprüche**

1. Verfahren zur Herstellung einer Katalysatorkomponente mit einem Teilchendurchmesser von weniger als 10 µm zur Polymerisation und Copoymerisation von Ethylen und 1-Olefinen zu ultrahochmolekularen Ethylenhomo- oder - copolymeren in Suspension oder in der Gasphase, dadurch gekennzeichnet, daß

a) eine Magnesiumverbindung der Formel I

$$R^1 - Mg - R^2 \qquad (I),$$

worin R$^1$ und R$^2$ gleich oder verschieden sind und einen C$_1$-C$_{20}$-Alkylrest, einen C$_5$-C$_{20}$-Cycloalkylrest, einen C$_6$-C$_{20}$-Arylrest oder einen C$_2$-C$_{20}$-Alkenylrest bedeuten, in einem inerten Kohlenwasserstoff bei einer Temperatur von 0 bis 100°C und einer Rührgeschwindigkeit von mindestens 600 Upm mit

b) einem Halogenierungsagens der Formel II

$$X_n - C - Y \qquad (II),$$

worin X ein Halogenatom, n ≥ 3 ist und Y Wasserstoff, Halogen, einen C$_1$-C$_{20}$-Alkylrest,

einen $C_5$-$C_{20}$-Cycloalkylrest, einen $C_6$-$C_{20}$-Arylrest oder einen $C_2$-$C_{20}$-Alkenylrest bedeutet,
zu einem festen Produkt, überwiegend bestehend aus einer Verbindung der allgemeinen Formel III

$$Mg - X_2 \qquad (III),$$

worin X die vorgenannte Bedeutung hat, umgesetzt wird und
c) mit einer in Kohlenwasserstoffen löslichen Titanverbindung der Formel IV

$$Z_m - Ti - Y_{4-m} \qquad (IV),$$

worin Z und Y gleich oder verschieden sind und ein Halogenatom, eine $C_1$-$C_6$-Alkoxygruppe oder einen $C_1$-$C_{20}$-Carboxyrest bedeuten und m eine Zahl von 0 bis 4 ist, im Molverhältnis Ti : Mg von 0,01 bis 1 zur Reaktion gebracht wird, wobei
d) eine Elektronendonatorverbindung bei einer der Reaktionsstufen a), b) oder c) in einer Menge von 0,01 bis 1 mol je mol Magnesiumverbindung zugegen ist.

2. Verfahren nach Anspruch 1, dadurch gekennzeichnet, daß als Elektronendonatorverbindungen Ester von Carbonsäuren, Ether, Ketone, Amide oder sauerstoffhaltige Phosphor- oder Schwefelverbindungen eingesetzt werden.

3. Verfahren nach Anspruch 1, dadurch gekennzeichnet, daß das Molverhältnis zwischen Elektronendonator und Titanverbindung im Bereich von 0,1 bis 10 liegt.

4. Katalysatorkomponente, hergestellt nach dem Verfahren gemäß Anspruch 1.

5. Verwendung der nach Anspruch 1 hergestellten Katalysatorkomponente zum Polymerisieren und Copolymerisieren von Ethylen mit 1-Olefinen zu ultrahochmolekularen Ethylenhomo- und -copolymeren.

6. Verfahren zur Herstellung von ultrahochmolekularen Ethylenhomo- und Copolymeren durch Polymerisation und Copolymerisation von Ethylen in Suspension oder in der Gasphase, in Gegenwart eines Mischkatalysators bestehend aus einer Übergangsmetallverbindung (Komponente A) und einer aluminiumorganischen Verbindung (Komponente B), dadurch gekennzeichnet, daß die Komponente A nach dem Verfahren gemäß Anspruch 1 hergestellt wurde.

**Claims**

1. A process for preparing a catalyst component having a particle diameter of less than 10 μm for the polymerization and copolymerization of ethylene and 1-olefins to ultrahigh molecular weight ethylene homo- or copolymers in suspension or in the gas phase,
which comprises reacting

a) a magnesium compound of the formula I

$$R^1 - Mg - R^2 \qquad (I),$$

where $R^1$ and $R^2$ are identical or different and are a $C_1$-$C_{20}$-alkyl radical, a $C_5$-$C_{20}$-cycloalkyl radical, a $C_6$-$C_{20}$-aryl radical or a $C_2$-$C_{20}$-alkenyl radical, in an inert hydrocarbon at a temperature from 0 to 100°C and a stirring rate of at least 600 rpm with
b) a halogenating agent of the formula (II)

$$X_n - C - Y \qquad (II),$$

where X is a halogen atom, $n \geq 3$ and Y is hydrogen, halogen, a $C_1$-$C_{20}$-alkyl radical, a $C_5$-$C_{20}$-cycloalkyl radical, a $C_6$-$C_{20}$-aryl radical or a $C_2$-$C_{20}$-alkenyl radical,
to give a solid product comprising predominantly a compound of the formula III

$$Mg - X_2 \qquad (III),$$

where X has the meaning given above, and reacting this product
c) with a hydrocarbon-soluble titanium compound of the formula IV

$$Z_m - Ti - Y_{4-m} \qquad (IV),$$

where Z and Y are identical or different and are a halogen atom, a $C_1$-$C_6$-alkoxy group or a $C_1$-$C_{20}$-carboxy radical and m is a number from 0 to 4, in a molar ratio Ti:Mg from 0.01 to 1, while
d) an electron donor compound is present in one of the reaction stages a), b) or c) in an amount from 0.01 to 1 mol per mole of magnesium compound.

2. The process as claimed in claim 1, wherein the electron donor compounds used are esters of carboxylic acids, ethers, ketones, amides or oxygen-containing phosphorus or sulfur compounds.

3. The process as claimed in claim 1, wherein the molar ratio of electron donor to titanium compound lies in the range from 0.1 to 10.

**4.** A catalyst component prepared by the process as claimed in claim 1.

**5.** Use of the catalyst component prepared as claimed in claim 1 for the polymerization and copolymerization of ethylene with 1-olefins to ultrahigh molecular weight ethylene homo- and copolymers.

**6.** A process for preparing ultrahigh molecular weight ethylene homo- and copolymers by polymerization and copolymerization of ethylene in suspension or in the gas phase in the presence of a mixed catalyst comprising a transition metal compound (component A) and an organoaluminum compound (component B), wherein the component A has been prepared by the process as claimed in claim 1.

**Revendications**

**1.** Procédé pour la préparation d'un constituant de catalyseur avec un diamètre de particules inférieur à 10µm pour la polymérisation et la copolymérisation d'éthylène et de 1-oléfines en homo- ou copolymères d'éthylène de poids moléculaire très élevé en suspension ou en phase gazeuse, caractérisé en ce que l'on fait réagir

**a)** un composé du magnésium de la formule I

$$R^1 - Mg - R^2 \qquad (I),$$

où $R^1$ et $R^2$ sont identiques ou différents et représentent un reste alkyle en $C_1$-$C_{20}$, un reste cycloalkyle $C_5$-$C_{20}$, un reste aryle en $C_6$-$C_{20}$ ou un reste alcényle en $C_2$-$C_{20}$ dans un hydrocarbure inerte à une température de 0 à 100°C et à une vitesse d'agitation d'au moins 600 tr/min avec

**b)** un agent d'halogénation de la formule II

$$X_n - C - Y \qquad (II),$$

où X est un atome d'halogène n ≥ 3 et Y est l'hydrogène, un halogène, un reste alkyle en $C_1$-$C_{20}$, un reste cycloalkyle en $C_5$-$C_{20}$, un reste aryle en $C_6$-$C_{20}$ ou un reste alcényle en $C_2$-$C_{20}$,
en un produit solide, principalement constitué d'un composé de la formule générale III

$$Mg - X_2 \qquad (III),$$

où X à la signification citée précédemment, et on le fait réagir avec

**c)** un composé du titane soluble dans les hydrocarbures de la formule IV

$$Z_m - Ti - Y_{4-m} \qquad (IV),$$

où Z et Y sont identiques et différents et représentent un atome d'halogène, un groupe alcoxy en $C_1$-$C_6$ ou un reste carboxy, en $C_1$-$C_{20}$ et m est un nombre de 0 à 4, avec le rapport molaire Ti : Mg de 0,01 à 1,

**d)** un composé donneur d'électrons étant ajouté dans une des étapes de réaction a), b) ou c) dans une quantité de 0,01 à 1 mol par mol de composé du magnésium.

**2.** Procédé selon la revendication 1, caractérisé en ce que l'on utilise comme composés donneurs d'électrons des esters d'acides carboxyliques, des éthers, des cétones, des amides ou des composés du soufre ou du phosphore contenant de l'oxygène.

**3.** Procédé selon la revendication 1, caractérisé en ce que le rapport molaire entre le donneur d'électrons et le composé du titane est compris dans le domaine de 0,1 à 10.

**4.** Constituant de catalyseur préparé selon le procédé selon la revendication 1.

**5.** Utilisation du constituant de catalyseur préparé selon la revendication 1 pour la polymérisation et la copolymérisation d'éthylène avec des 1-oléfines en homo- et copolymères d'éthylène de poids moléculaire très élevé.

**6.** Procédé pour la préparation d'homo- et de copolymères d'éthylène de poids moléculaire très élevé par polymérisation et copolymérisation d'éthyléne en suspension ou en phase gazeuse en présence d'un catalyseur mixte constitué d'un composé de métal de transition (constituant A) et d'un composé organique de l'aluminium (constituant B, caractérisé en ce que le constituant A a été préparé selon le procédé selon la revendication 1.